# EUROPÄISCHE PATENTSCHRIFT

(11) **EP 3 667 863 B1**
(45) Veröffentlichungstag und Bekanntmachung des Hinweises auf die Patenterteilung: **28.10.2020**
(21) Anmeldenummer: 19401051.8
(22) Anmeldetag: 09.12.2019
(51) Int. Cl.: H02J 13/00, H05B 47/10, G08C 17/02

(54) **SCHALTVORRICHTUNG ZUM VERWENDEN IN EINER WECHSELSCHALTUNG SOWIE VERFAHREN**
SWITCHING APPARATUS FOR USE IN A TOGGLE SWITCH AND METHOD
COMMUTATEUR À L'UTILISATION DANS UN CIRCUIT VA-ET-VIENT ET PROCÉDÉ

(30) Priorität: 10.12.2018 DE 102018131515
(43) Veröffentlichungstag der Anmeldung: 17.06.2020
(73) Patentinhaber: TechniSat Dresden GmbH, 01139 Dresden (DE); TechniSat Digital GmbH, 54550 Daun (DE)
(72) Erfinder: Baer, Hans-Joachim, 01109 Dresden (DE)

(56) Entgegenhaltungen:
- DE-A1-102009 060 435
- DE-U1-202010 009 586
- US-A1- 2013 271 025

## Beschreibung

Die Erfindung betrifft eine Schaltvorrichtung, die eingerichtet ist zum Verwenden in einer Wechselschaltung, sowie ferner ein Verfahren zum Ausführen in einer Schaltvorrichtung. Der Zweck der Schaltvorrichtung ist u.a. das Detektieren eines nicht vorhandenen Stromflusses durch die Wechselschaltung insgesamt. Demnach kann die Schaltvorrichtung die Aussage liefern, ob ein Strom durch die Wechselschaltung und mithin durch den Verbraucher und fließt oder nicht.

In einer Vielzahl bekannter Anwendungen der Wechselschaltung erübrigt sich eine solche Detektion. Wechselschaltungen kommen u.a. bei Raumbeleuchtungen zum Einsatz. Der Bediener des Wechselschalters hat i.d.R. keine Mühe festzustellen, ob die Raumbeleuchtung an- oder ausgeschalten ist, sofern er sich in dem betroffenen Raum oder in dessen Nähe befindet. Die Wechselschaltung, die auch als Kreuzschaltung ausgeführt sein kann, funktioniert mit herkömmlichen mechanischen Wechsel-/Kreuzschaltern nach einem sehr einfachen Prinzip, wobei es lediglich auf das Wechseln zwischen zwei Zuständen (AN/AUS) ankommt. Dabei weicht der nächste Zustand schlichtweg vom vorherigen ab.

Aus der EP 1 734 636 A2 ist eine Installation bekannt, die besteht aus einer Schaltdose, einem Bedienelement und einer Heim- oder Gebäudeautomationssteuerung. Die Schaltdose umfasst wenigstens je ein Schaltelement, ein sowohl Schaltbefehle entgegennehmendes und/oder Schaltzustände weitermeldendes bidirektionales Kommunikationsmodul, einen Mikrocontroller sowie Verdrahtungsanschlüsse für einen oder mehrere Verbraucher. Ferner ist die Schaltdose über vorhandene, elektrische Leiter an das Netz angeschlossen und es kommunizieren ein oder mehrere Bedienelemente mit der Schaltdose.

Aus dem zitierten Stand der Technik lässt sich zwar eine Lösung für einfache Lichtschalter entnehmen, aber keine für eine Wechselschaltung.

Technisch möglich ist es, einen Wechselschalter aus der Ferne zu bedienen (z.B. ferngesteuertes Relais). Beim Bedienen aus der Ferne ist es möglicherweise nicht ausreichend, den Zustand nur zu wechseln, sondern zumindest den aktuellen Zustand zu kennen, sei es vor und/oder nach dem Wechseln. Die Heimautomation bringt eine Reihe von Vorteilen mit sich. Mittels einer solchen Heimautomation gelingt es beispielweise Geräte, Lampen und dergleichen aus der Ferne mit einem Mobiltelefon an- oder auszuschalten. Das ist natürlich kein Selbstzweck, sondern der Bediener hat regelmäßig die Absicht, einen von ihm beabsichtigten Zustand herzustellen, z.B. die versehentlich brennen gelassene Lampe auszuschalten usw. Idealerweise sieht der Bediener auf seinem Mobiltelefon, ob z.B. die besagte Lampe schon ausgeschalten ist oder nicht.

In einer Heimautomation, die eine Zentrale aufweist und mindestens ein Gerät, nämlich einen Sensor und/oder einen Aktor, liefert der Sensor derartige Informationen wie z.B., ob ein Schalter (z.B. in einer Schaltersteckdose) geschalten ist oder nicht. Ähnlich verhält es sich bei einfachen Lichtschaltern. Es ist beim Einsatz einer Heimautomation im Zuge der Installation oder Erweiterung selbiger grundsätzlich denkbar, durch Austausch jeglicher herkömmliche Schalter und dergleichen durch zur Heimautomation geeignete Geräte ein funktionsfähiges Gesamtsystem herzustellen. Solche Lösungen sind aufgrund des Aufwandes an Änderungen und aufgrund der Anschaffungskosten möglicherweise nicht von Vorteil. Es ist auch ein Aspekt der Heimautomation, dass grundsätzlich Geräte nicht nur von einem Hersteller zur Anwendung kommen können.

Zurückkommend zu Schaltern und insbesondere zu Wechselschaltungen wird es technisch möglicherweise dann problematisch, sofern der Austausch lediglich eines einzigen Schalters pro Raum genügen soll, um den Raum in die Heimautomation integrieren zu können.

Bekannt ist ferner aus DE 10 2009 060 435 A1 (adäquat aus EP 2 517 329 B1) ein fernsteuerbarer Schalter, bei dem die erste Anschlussgruppe zumindest einen Anschluss umfasst, die zweite Anschlussgruppe einen ersten Anschluss umfasst, der im ersten Schaltzustand der Schaltanordnung elektrisch mit dem Anschluss der ersten Anschlussgruppe verbunden ist, und die zweite Anschlussgruppe einen zweiten Anschluss umfasst, der im zweiten Schaltzustand der Schaltanordnung elektrisch mit dem Anschluss der ersten Anschlussgruppe verbunden ist, wobei im Strompfad des Anschlusses der ersten Anschlussgruppe, der Schaltanordnung und der zweiten Anschlussgruppe angeordnete Strommessmittel zum Erzeugen eines den gemessenen Strom repräsentierenden Ausgangssignals vorgesehen sind und die fernsteuerbare Steuereinheit eingerichtet ist, das Schaltsignal basierend auf dem Ausgangssignal der Strommessmittel und einem Fernsteuersignal zu erzeugen, wobei der fernsteuerbaren Steuereinheit Tasterkennungsmittel zur Erkennung der Betätigung externer Tastmittel zugeordnet sind und die fernsteuerbare Steuereinheit eingerichtet ist, ein auf dem Tasterkennungssignal der Tasterkennungsmittel basierendes Schaltsignal zum Schalten der Schaltanordnung zu erzeugen, und die externen Tastmittel bei Betätigung einen Stromkreis schließen oder einen geschlossenen Stromkreis unterbrechen, wobei die Tasterkennungsmittel in den Stromkreis eingeschleift sind, als Widerstandsmessmittel ausgebildet sind und eingerichtet sind, der fernsteuerbaren Steuereinheit ein den von ihnen gemessenen Widerstand repräsentierendes Tasterkennungssignal zur Verfügung zu stellen.

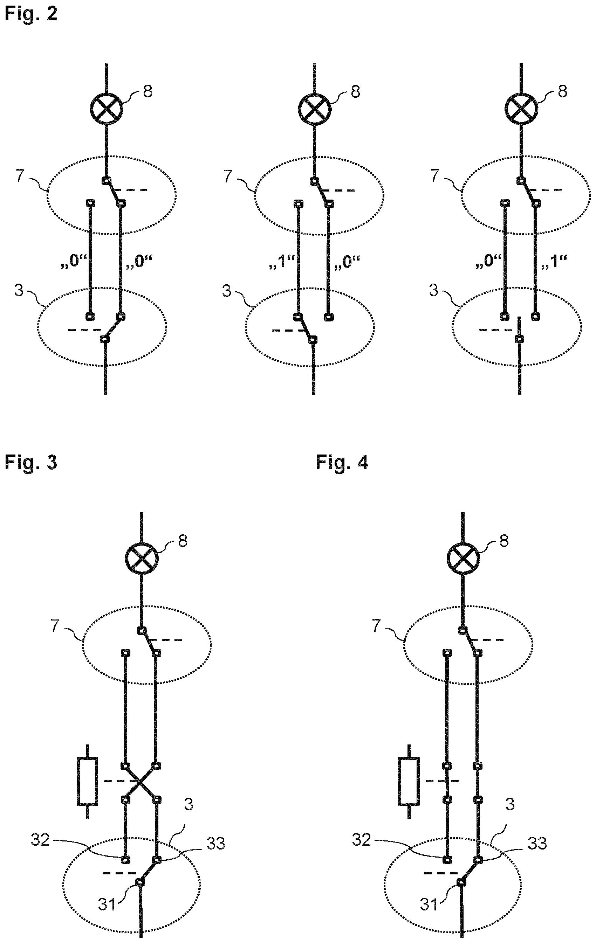

Mit anderen Worten ist aus dem zitierten Stand der Technik bekannt, den Stromfluss durch den Strompfad mittels eines Strommessmittels zu überprüfen (vgl. darin Fig. 3); z.B. mittels eines Hall-Sensors.

Im Grunde geht es bei der angestrebten Lösung nicht zwingend um das Messen eines Stromes, sondern primär um die Frage danach, ob Strom durch den Schaltkreis inkl. Verbraucher fließt oder nicht (d.h. Detektion eines Stromflusses im Strompfad).

Zum Messen und/oder zum Detektieren eines Stromflusses lassen sich ferner Mittel verwenden zum sog. berührungslosen Messen, nämlich ohne elektrischen Kontakt mit dem stromführenden elektrischen Leiter. Der Hall-Sensor ist eine Möglichkeit von vielen (z.B. Zylinderkondensator, Anwendung des Transformator-Prinzip, sog. Reed-Kontakte/-Sensoren), um einen Stromfluss zu detektieren. Denkbar ist auch, ein Leuchtmittel mit kleinen Abmessungen (z.B. Glimmlampe) in Reihe mit dem Verbraucher zu schalten sowie einen optischen Sensor zu verwenden, um hiermit indirekt einen Stromfluss zu detektieren. Die letztgenannte Lösung verwendet das Prinzip der optischen Kopplung, welches auch in sog. Optokopplern verwirklicht ist.

Sofern sich dem Stand der Technik ein breites Spektrum möglicher Lösungen entnehmen lässt, stellt sich immer noch die Frage, welche davon technisch zuverlässig einsetzbar ist bei möglichst geringem Aufwand. Weniger in Betracht kommen Komponenten/Bauelemente mit etwas größeren Platzbedarf, weil in Hinblick auf Schaltereinsätze und Schalterdosen diesbezüglich Grenzen gesetzt sind. Bei der Herstellung eines Schaltereinsatzes mit Elektronik bzw. mit solchen Bauteilen geht es üblicherweise darum, eine Leiterplatte automatisch zu fertigen (Bestücken, Löten, usw.) und das möglichst ohne oder mit wenig manuellen Nacharbeiten. Insofern besteht das Bestreben, mit den sog. "gängigen" Bauteilen auszukommen. Ein weiterer Aspekt ist, dass eine herkömmliche Strommessung (Strommessmittel im Strompfad) in der Schalterdose aufgrund des Spektrums möglicher Ströme (z.B. über 10A) mit elektrischen Sicherheitsvorkehrungen einher gehen muss. Das betrifft ggf. auch die Leiterplatte und insbesondere Abstände und Dicken von Leitbahnen.

Es kann als eine erste Aufgabe gesehen werden, eine Schaltvorrichtung (Schaltereinsatz) für eine Wechselschaltung zu finden, wobei die Schaltvorrichtung für den Einsatz in einer Heimautomation ausgebildet ist.

Eine Heimautomation weist eine Zentrale (engl. "controller") auf und mehrere sog. Geräte (engl. "device"), genau genommen mindestens eine erste Zentrale und mindestens ein Gerät. Im Fall mehrerer Zentralen (physisch), bilden diese untereinander ein hierarchisches System aus, das als eine Zentrale (logisch/funktional) gesehen werden kann. Ein wesentliches Merkmal der Heimautomation ist die drahtlose Kopplung zwischen Zentrale und Gerät(en), was die Installation in einer Wohnung, in einem Gebäude oder dergleichen deutlich vereinfacht. Zu den Geräten zählen gemäß ihrer Funktion sog. Sensoren und sog. Aktoren.

Sensoren einer Heimautomation sind vorgesehen, um verschiedenste Umgebungsparameter zu erfassen wie beispielsweise Bewegung, Windgeschwindigkeit/-richtung, Temperatur uvm. Ferner lassen sich mittels vielfältiger Aktoren beispielsweise Rollläden an Fenstern sowie Thermostatventile an Heizkörpern öffnen und schließen. Die hierfür erforderliche Logik stellt üblicherweise eine Zentrale bereit. Bei der nachfolgend aufgezeigten Vorrichtung handelt es sich gemäß den genannten Komponenten einer Heimautomation primär um einen Aktor der ggf. mind. einen Sensor aufweisen kann.

Heimautomation wird auch als Haussteuerung (engl. "SmartHome") bezeichnet. Kopplungen zwischen den aufgezeigten Komponenten (Zentrale(n), Aktor(en), Sensor(en)) sind zwar üblicherweise als drahtlose Verbindungen ausgeführt, können aber in Ausnahefällen zudem auch drahtgebunden sein. Die Komponenten können ferner für einen autonomen Betrieb eingerichtet sein und sowohl die Mittel zur drahtlosen Kommunikation sowie eine autonome Energieversorgung aufweisen (z.B. Batterie o.ä.). Ferner weisen solche Komponenten minimal Bedienelemente auf; wie beispielsweise lediglich einen Taster.

Die Daten, die die Sensoren mittels der drahtlosen Kommunikation der Zentrale bereitstellen, werden hier zunächst als Messdaten bezeichnet. Grundsätzlich kommunizieren die Komponenten mittels sogenannter Transportdaten gemäß einem Transportprotokoll. Die Messdaten sind demnach in den Transportdaten enthalten. Ferner sind in den Transportdaten sogenannte Anweisungen enthalten. Es ist vorgesehen, dass die Anweisungen gemäß dem Transportprotokoll (Spezifikation) den Komponenten insofern bekannt sind, dass solche Anweisungen eine technische Reaktion auf der Gegenseite bewirken können. Mit anderen Worten handelt es sich bei Transportprotokoll um eine datentechnische Schnittstelle, die vordefinierte Anweisungen umfasst sowie unbestimmte Informationen enthalten kann. Zu diesen unbestimmten Informationen zählen unter anderen die Messdaten, weil in den Messdaten beliebige Daten enthalten sein können, der Größe und dem Umfang nach.

Besagte Komponenten können platzsparend ausgebildet sein. Aus der WO 2015/040144 A1 ist beispielsweise ein Detektor bekannt, der signalisiert ob ein Fenster geöffnet oder geschlossen ist. Der Detektor ist derart flach ausgeführt, dass sich dieser zwischen Fenster und dessen Rahmen anordnen lässt.

Es sind diverse Komponenten bekannt, die unterschiedliche Funktionen von Detektoren und/oder Sensoren aufweisen. Mit diesen Funktionen lassen sich Zustände wie Dämmerung/Licht, Temperatur, Wind (-stärke/-richtung), Bewegung usw. detektieren. Ferner kann eine Komponente als Aktor fungieren und beispielweise einen Schalter in einer Steckdose betätigen. Ein Aktor kann auch ein Leuchtmittel sein, dass so eingestellt wird, dass es in einer eingestellten Farbe, Helligkeit und/oder mit einer Farbtemperatur leuchtet.

Die drahtlose Kommunikation bietet die Möglichkeit der flexiblen Ortswahl bei der Installation der Komponenten. Die drahtlose Kommunikation kann für kurze Distanzen ausgebildet sein (bis ca. 30 m im Innenbereich). Es sind Lösungen bekannt, die mittels WLAN (IEEE 802.11) kommunizieren. Andere nutzen DECT oder ITU-T G.9959. Mittels der Kommunikation lässt sich eine Komponente mit einer Zentrale koppeln. Mit anderen Worten wird bei der Heimautomation ein Netzwerk ausgebildet.

In der Zentrale fließen die Informationen und/oder Daten zusammen, die die Komponenten bereitstellen. In selbiger lassen sich verschiedene Auswertungen vornehmen und Szenarien anlegen, mittels derer Aktoren betätigt werden z.B. für das Betätigen von Rollläden, Verschattungen, Berieselungen, Beleuchtungen, Heizungen usw. Mit anderen Worten stellt die Zentrale einen überwiegenden Teil der Logik bereit, die für die Heimautomation benötigt wird. Die Sensoren liefern Eingangswerte und die Aktoren reagieren auf Kommandos.

Bezüglich der Kommunikation, dem Liefern von Eingangswerten und dem Ausgeben von Kommandos haben sich bereits technische Lösungen etabliert, die hier unter dem Begriff des Protokolls oder des Übertragungsprotokolls zusammengefasst werden. Solche Protokolle heißen z.B. "REST-API", "ZigBee" und "Z-Wave ®". Der Fachwelt der Heimautomation sind diese Begriffe geläufig. Für den Anwender der Heimautomation ist lediglich beachtlich, dass er -dem Protokoll nach- zu seiner Zentrale passende Komponenten verwendet. Der Vorteil der genannten Protokolle ist, dass diese eine Art Norm oder Standard vorgeben, sodass es für die Zentrale nur maßgeblich ist, dass eine Komponente den Standard unterstützt oder nicht. Es sind zentrale Einheiten bekannt, die mehrere Standards unterstützen können.

Auf der Seite der Zentrale stellt das Protokoll eine Schnittstelle (API=engl. "application interface") für angrenzende Software bereit. So lassen sich mittels dieser Schnittstelle und Programmierwerkzeugen Funktionen schaffen, die der Zentrale ein logisches Verhalten verleihen. Dieses logische Verhalten ist zumeist so angelegt, dass einem Bediener zwar weitestgehend entgegengekommen wird, dieser aber die entscheidenden Einstellungen noch selbst vornehmen oder ändern kann. Zu diesem Zweck wird dem Bediener üblicherweise eine Bedienoberfläche bereitgestellt.

Bezüglich der entscheidenden Einstellungen folgen nunmehr Beispiele. Im ersten Fall soll auf die Dämmerung reagiert werden mittels eines Dämmerungssensors (Sensor) und mindestens eines Rollladens (Aktor). Die Komponenten sind Bestandteile der Heimautomation und ließen sich mittels der Bedienoberfläche koppeln. Allerdings ist die Frage, in welchem Zustand der Dämmerung (Helligkeit) der Rollladen schließen oder öffnen soll. Möglicherweise soll das abends und morgens unterschiedlich sein. D.h., dass der Bediener letztlich in der Lage ist oder sein sollte hier eine Feinabstimmung vorzunehmen, auf die es ankommt, damit seinen Bedürfnissen entsprochen wird. In einem anderen Fall geht es um eines elektrisches Heizgerät, das mittels eines Temperatursensors gesteuert werden soll. Hier könnte eine schaltbare Steckdose zum Einsatz kommen. Neben der Einstellung der Umschalttemperaturen (z.B. zwei aufgrund der zu bevorzugenden Schalt-Hysterese) kann der Bediener möglicherweise das Schaltverhalten wählen, ggf. aus vorgegebenen. In einem letzten Fall soll in eine Steuerung der untertägige Stand und Neigungswinkel der Sonne einfließen, der sich unter Hinzunahme von Datum, Uhrzeit und ggf. des Standortes bestimmen lässt. Aus den Beispielen lässt sich entnehmen, dass Schwellwerte eine Rolle spielen, aber auch Funktionen die eine Logik bereitstellen (z.B. Schalthysterese, Kalender) und die ggf. auf Datenbanken oder auf Schnittstellen im Internet zurückgreifen können.

Es kann als eine Aufgabe der Erfindung angesehen werden, die im Stand der Technik identifizierte Lücke zu schließen beziehungsweise die Nachteile des Standes der Technik zu überwinden.

Es wird eine Schaltvorrichtung gemäß Anspruch 1 vorgeschlagen sowie ein Verfahren gemäß Anspruch 8. In den abhängigen Ansprüchen sind Ausführungsformen der aufgezeigten Ausgestaltungen dargestellt.

Gemäß einer ersten Ausgestaltung ist eine Schaltvorrichtung vorgeschlagen zum Verwenden in einer Wechselschaltung. Die Schaltvorrichtung weist einen Wechselschalter auf. Der Wechselschalter weist einen ersten Eingang sowie einen ersten Ausgang und einen zweiten Ausgang auf. Der Wechselschalter ist eingerichtet, den ersten Eingang entweder mit dem ersten Ausgang in einer ersten Schaltstellung oder mit dem zweiten Ausgang in einer zweiten Schaltstellung zu koppeln. Die Schaltvorrichtung weist ferner ein erstes und ein zweites Messelement auf, wobei jedes der Messelemente einen ersten Messeingang und einen zweiten Messeingang sowie einen Messausgang aufweist. Der erste Messeingang des ersten Messelementes sowie der erste Messeingang des zweiten Messelementes sind mit dem ersten Eingang des Wechselschalters gekoppelt. Der zweite Messeingang des ersten Messelementes ist mit dem ersten Ausgang des Wechselschalters gekoppelt. Der zweite Messeingang des zweiten Messelementes ist mit dem zweiten Ausgang des Wechselschalters gekoppelt.

Das erste Messelement und das zweite Messelement sind eingerichtet, entsprechend einer ersten beziehungsweise einer zweiten elektrischen Spannung zwischen dem ersten Messeingang und dem zweiten Messeingang, an dem Messausgang eine dritte beziehungsweise eine vierte elektrische Spannung bereitzustellen. Dabei weisen die dritte und die vierte elektrische Spannung jeweils einen Spannungswert auf, der aussagt, ob die erste beziehungsweise die zweite elektrische Spannung entweder unterhalb oder oberhalb eines Schwellwertes liegt. Die Schaltvorrichtung weist ferner ein Auswerteelement auf, das eingerichtet ist zum Bewerten der dritten und/oder der vierten elektrischen Spannung und das ferner eingerichtet ist, eine elektronisch auswertbare Information bereitzustellen, die aussagt, ob der erste Eingang stromdurchflossen ist oder nicht.

Gemäß einer Ausführungsform der Schaltvorrichtung ist das Auswerteelement ferner eingerichtet, eine elektronisch auswertbare Information bereitzustellen, die aussagt, ob der erste Ausgang oder der zweite Ausgang stromdurchflossen ist oder nicht.

Gemäß einer Ausführungsform der Schaltvorrichtung ist die Schaltvorrichtung eingerichtet, dem Auswerteelement mittels einer zusätzlichen Kopplung die Schaltstellung des Wechselschalters bereitzustellen, nämlich ob der Wechselschalter die erste Schaltstellung oder die zweite Schaltstellung eingenommen hat.

Gemäß einer Ausführungsform der Schaltvorrichtung ist das Auswerteelement eingerichtet, die elektronisch auswertbare Information indem bereitzustellen, im Fall der ersten Schaltstellung die vierte elektrische Spannung alternativ im Fall der zweiten Schaltstellung die dritte elektrische Spannung einzubeziehen.

Gemäß einer Ausführungsform der Schaltvorrichtung weist das erste und/oder das zweite Messelement einen elektrischen Widerstand und einen Spannungskomparator auf. Der elektrische Widerstand ist zwischen beziehungsweise mit dem ersten und dem zweiten Messeingang gekoppelt. Der Spannungskomparator ist eingerichtet, eine Potenzialdifferenz zwischen dem ersten und dem zweiten Messeingang zu detektieren, mithin eine Spannung über dem Widerstand, nämlich die erste elektrische Spannung beziehungsweise die zweite elektrische Spannung.

Gemäß einer Ausführungsform der Schaltvorrichtung ist der Schwellwert der Messelemente derart eingestellt und/oder gewählt ist, dass dieser geringfügig über Null liegt, wobei geringfügig heißt, dass der Schwellwert nach derjenigen Eigenschaft des Spannungskomparators zu wählen ist, die aussagt, ab welcher Potentialdifferenz, der Spannungskomparator selbige zuverlässig detektiert.

Gemäß einer Ausführungsform der Schaltvorrichtung ist die Schaltvorrichtung ausgebildet zum Betreiben in einer Heimautomation, wobei der Schaltvorrichtung eingerichtet ist, als ein Sensor und/oder als ein Aktor der Heimautomation zu fungieren, und ist demnach eingerichtet zum drahtlosen Koppeln mit einer Zentrale der Heimautomation, wobei ggf. der Sensor eingerichtet ist, der Zentrale die Information bereitzustellen, ob der erste Eingang stromdurchflossen ist oder nicht und/oder ggf. der Aktor eingerichtet ist, einen Befehl indem zu verarbeiten, den Wechselschalter umzuschalten, d.h. die Schaltstellung zu wechseln, nämlich von der ersten Schaltstellung in die zweite Schaltstellung oder umgekehrt.

Gemäß einer weiteren Ausgestaltung ist ein Verfahren zum Betreiben einer Wechselschaltung vorgesehen zum Ausführen in einer Schaltvorrichtung, wie sie vorhergehend beschrieben ist. Das Verfahren weist die Schritte auf:
- Messen der ersten und der zweiten Spannung der Schaltvorrichtung und
- Bereitstellen der dritten beziehungsweise der vierten Spannung der Schaltvorrichtung.

Gemäß einer Ausführungsform des Verfahrens wird die dritte Spannung und die vierte Spannung bereitgestellt logischen Werten entsprechend, die logischen Werte aus der Wertemenge 0 und 1. Das Verfahren weist ferner die Schritte auf:
- dass je nach Schaltstellung des Wechselschalters der Schaltvorrichtung im Fall der ersten Schaltstellung der negierte -NOT- logische Wert der vierten Spannung als Resultat bereitgestellt wird und alternativ
   im Fall der zweiten Schaltstellung der negierte -NOT- logische Wert der dritten Spannung als Resultat bereitgestellt wird,
   wobei das Resultat aussagt, ob der erste Eingang der Schaltvorrichtung stromdurchflossen ist -falls 1- oder nicht -falls 0-.

Gemäß einer Ausführungsform des Verfahrens die dritte Spannung und die vierte Spannung bereitgestellt wird logischen Werten entsprechend, die logischen Werten aus der Wertemenge 0 und 1. Das Verfahren weist ferner die Schritte auf:
- Negieren -NOT- der logischen Werte der dritten und der vierten Spannung und
- Addieren -AND- der logischen Werte der dritten und der vierten Spannung sowie
- Bereitstellen des Resultates der Addition, das aussagt, ob der erste Eingang der Schaltvorrichtung stromdurchflossen ist -falls 1- oder nicht -falls 0-.

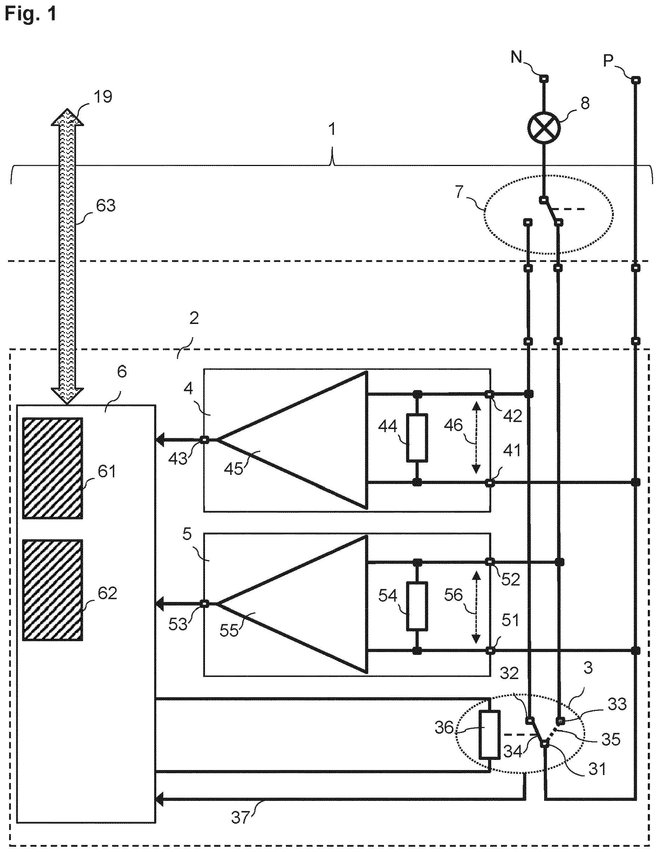

Die der Schaltvorrichtung und dem Verfahren zugrunde liegende technische Wirkungsweise lässt sich ferner wie folgt beschreiben. Beide Schaltleitungen zwischen den zwei Wechselschaltern sind jeweils über einen elektrischen Widerstand mit dem ersten Kontakt der elektrischen Quelle (z.B. Phasenleiter P in Fig. 1) verbunden. Sofern einer der Ausgänge des Wechselschalters der Schaltvorrichtung über den herkömmlichen (zweiten) Wechselschalter und über den Verbraucher mit dem zweiten Kontakt der elektrischen Quelle (z.B. Nullleiter N in Fig. 1) verbunden ist, aber jedoch nicht mit dem ersten Kontakt (P), fällt über den Widerstand (in dem Messelement) eine Spannung ab, die ein Spannungskomparator detektieren kann. In dem Fall ist jeder der beiden Wechselschalter auf die jeweils andere Schaltleitung geschalten. Mithin fließt kein Strom durch beide Wechselschalter und folglich auch nicht durch den Verbraucher. Dabei liefert einer der beiden Spannungskomparatoren eine logische Eins ("1"). Im Übrigen ist ausgeschlossen, dass beide Spannungskomparatoren eine logische Eins ausgeben. In dem zweiten Fall, in dem Strom fließt, sind beide Wechselschalter über eine erste der zwei Schaltleitungen verbunden, während die andere zweite Schaltleitungen keine einzige Kopplung aufweist. Der Spannungskomparator der zweiten Schaltleitungen liefert aufgrund der vollständigen Entkopplung eine logische Null ("0"). Der Spannungskomparator der zweiten Schaltleitungen liefert gleichermaßen eine logische Null, weil der mit diesem Komparator gekoppelte Widerstand überbrückt ist durch den Wechselschalter.

Nunmehr gibt es zwei Möglichkeiten, auf die Stromführung in der Wechselschaltung zu schlussfolgern. Die erste Möglichkeit besteht darin, lediglich die Ausgaben der beiden Spannungskomparatoren zu bewerten. Sofern nämlich beide eine logische Null ausgeben, fließt Strom und ansonsten nicht. Bei der zweiten Möglichkeit wird primär die Schalterstellung des Wechselschalters berücksichtigt sowie die Ausgabe des Spannungskomparators, der gerade nicht gekoppelt ist mittels des Wechselschalters der Schaltvorrichtung. Sofern dieser Spannungskomparator eine logische Eins ("1") ausgibt, fließt kein Strom, andernfalls bei einer logischen Null ("0") hingegen schon. Für die zweite Möglichkeit bietet es sich an, dass der Wechselschalter der Schaltvorrichtung zusätzliche Arbeitskontakte eines zweiten Schalters aufweist (z.B. gleich geschalteter Hilfskontakt). D.h., dass über diesen zweiten Schalter auf die Schalterstellung geschlussfolgert werden kann, mittels einer Hilfsspannung, die über die zusätzliche Kopplung ausgewertet werden kann. Denkbar oder zu bevorzugen ist, dass dieser Wechselschalter als elektrisch bedienbarer/betriebener Schalter (z.B. Relais) ausgeführt ist.

Eine vorteilhafte Ausführung ist darin zu sehen, dass sich der Wechselschalter entweder in eine sog. Mittelstellung bringen lässt und der mittels eines zusätzlichen Schalters eingangsseitig entkoppeln lässt. Es geht hierbei darum, dass beide Schaltleitungen zeitgleich an den Enden offen sind. Zunächst lässt sich so die Schalterstellung des zweiten Wechselschalters ermitteln. Dieser ist auf die Schaltleitung geschalten, dessen Spannungskomparator eine logische Eins ausgibt. Sofern keiner der beiden Spannungskomparatoren eine logische Eins liefert, ist davon auszugehen, dass der Verbraucher defekt ist oder fehlt.

In einer vorteilhaften Ausführungsform ist die Schaltvorrichtung derart ausgeführt, dass sich ein Messelement der beiden Messeelemente entkoppeln lässt zumindest eingangsseitig. D.h. es soll möglich sein, insbesondere die Widerstände von den Schaltleitungen und/oder von dem Phasen-/Nullleiter zu trennen.

In einer vorteilhaften Ausführungsform ist die Schaltvorrichtung derart ausgeführt, dass eine Auswertung bezüglich des Stromflusses, Schalterstellung, Schalterstellung des herkömmlichen Wechselschalters sowie eines Defektes/Fehlens des Verbrauchers (Bereitstellen der elektronisch auswertbaren Information) kurzzeitig erfolgt. Es kann ferner vorgesehen sein, dass lediglich zur Auswertung ein Messelement gekoppelt ist und ansonsten nicht (Schaltleitungen und/oder von dem Phasen-/Nullleiter).

Es könnte noch klarzustellen sein, dass es bei der Lösung nicht auf eine Messung des Stromes ankommt. Es geht schlichtweg um die Aussage, ob der Verbraucher An oder Aus ist. Jeder der beiden Zustände ist natürlich an einen vorhandenen oder nicht vorhandenen Stromfluss durch den Verbraucher, aber letztlich durch den gesamten Stromkreis, gebunden. Sofern hier ausgesagt wird, dass geschlussfolgert werden kann, ob ein Strom fließt oder nicht, betrifft das letztlich die beiden Zustände. Die der eigentlichen Messung (mittels Messelemente) zugrunde liegende physikalische Größe ist grundsätzlich eine Potenzialdifferenz (d.h. Spannung). Letztendlich wird mittels der Messelemente und dem Verbraucher ein Spannungsteiler ausgebildet. Ferner wird der nicht aktive Pfad geprüft und zudem der nicht aktive Zustand des Verbrauchers indem detektiert, dass der Verbraucher (sinngemäß) zum Verbrauchen bereit ist (betriebsbereit).

Um den Spannungsteiler geeignet auszubilden, kommt es zunächst auf die technischen Parameter des Verbrauchers an (Innenwiderstand bzw. Leistungsaufnahme), wobei grundsätzlich ein Bereich (von/bis) zu wählen ist. Der Innenwiderstand einer herkömmlichen Glühlampe liegt bei ca. 100Ω (25W, 150Ω) und darunter. Über dem Widerstand des Messelementes soll lediglich eine Potenzialdifferenz hergestellt werden, die der Spannungskomparator auch auswerten kann. Anstatt des einen Widerstandes kann selbstverständlich auch eine Widerstandsgruppe ausgebildet sein. Ferner kommt es hier nicht darauf an, ein Bauelement namens Widerstand zu verwenden, sondern es geht um die Eigenschaft, dass das verwendete Bauelement einen elektrischen Widerstand aufweist (z.B. Diode, Spule, Kondensator), der auch nicht zwingend konstant sein muss.

Unter den Spannungskomparatoren gibt es auch sog. einstellbare Spannungskomparatoren. Die Einstellbarkeit betrifft den Schwellwert. Der Schwellwert betrifft die Aussage des Spannungskomparators, ob an dessen Eingang eine Spannung anliegt oder nicht (relative Aussage). Der Schwellwert kann insofern beliebig gewählt werden, wie es der Spannungskomparator technisch zulässt. Es gibt Spannungskomparatoren die ab 0V einsetzbar sind (Schwellwert von wenigen Millivolt). Man kann sagen, dass Spannungskomparatoren für die technisch üblichen Spannungsbereiche erhältlich sind oder sich zumindest ausbilden lassen. Insofern erscheint es nicht zielführend, konkrete Schwellwerte anzusprechen. Ähnlich verhält es sich bei dem Widerstand. Selbiger ist ggf. so zu dimensionieren, dass er nur minimal Leistung aufnimmt (Vermeiden von Wärmeentwicklung). Andererseits scheint es sinnvoll, dass über dem Widerstand mehr Spannung abfällt (möglicherweise 90%) als über dem Verbraucher selbst, da ansonsten der Verbraucher nicht wirklich aus wäre. Der besagte Widerstand kann einen Spannungsteiler aufweisen, wobei der Spannungskomparator lediglich mit einem Widerstand des Spannungsteilers gekoppelt ist.

Gemäß einer Ausführungsform der Schaltvorrichtung ist das Auswerteelement ferner eingerichtet, eine elektronisch auswertbare Information bereitzustellen, die aussagt, ob der Verbraucher verwendbar oder möglicherweise defekt ist.

Gemäß einer Ausführungsform weist eine Heimautomation eine Zentrale auf und mindestens ein dezentrales Gerät, nämlich mindestens einen Sensor und/oder Aktor. Die Zentrale ist gebildet aus mindestens einer zentralen Einheit. Die mindestens eine zentrale Einheit ist zur drahtlosen Verbindung eingerichtet. Eine oder mehrere zentrale Einheiten bilden die Zentrale. Das mindestens eine dezentrale Gerät ist zur drahtlosen Verbindung eingerichtet und ist mithin der Sensor und/oder Aktor. Das dezentrale Gerät und die Zentrale ist jeweils eingerichtet zur Datenübertragung mittels der drahtlosen Verbindung. Mittels der drahtlosen Verbindung ist mindestens ein Netzwerk mit einem Übertragungsprotokoll ausgebildet. Das kann eines der oben gennannten Übertragungsprotokolle sein.

Die drahtlose Verbindung kann derart ausgebildet sein, dass die Zentrale mit dem Gerät unmittelbar kommuniziert oder mittelbar über ein zusätzliches Gerät. Somit lassen sich direkte Verbindungswege ggf. verkürzen.

Die Datenübertragung weist mindestens eine Schnittstelle für dezentrale Geräte mit unterschiedlicher Funktion auf, wobei vorgesehen ist, dass die Schnittstelle sowohl von dem dezentralen Gerät als auch von der Zentrale unterstützt wird. Die Zentrale weist eine Informationsverarbeitung auf. Die Informationsverarbeitung ist eingerichtet, Daten der Datenübertragung zu verwenden und/oder bereitzustellen. Die Informationsverarbeitung ist eingerichtet, die Daten mittels mindestens einem gespeicherten Regelwerk zu verwenden und/oder bereitzustellen.

Die Daten können Zustände (Informationen) und/oder Anweisungen (Befehle) enthalten. Zustände sind variabel. Befehle sind vorbestimmt u.a. um Reaktionen des Gerätes auszulösen.

Die Zentrale kann eingerichtet sein, eine Bedieneroberfläche bereitzustellen. Die Bedieneroberfläche kann eingerichtet sein, ein Regelwerk zu erstellen, zu ändern, zu speichern und/oder zu löschen. Ferner kann die Bedieneroberfläche eingerichtet sein, die mindestens eine drahtlose Verbindung einzurichten, zu ändern, zu speichern und/oder zu entfernen.

Die zentrale Einheit sowie das Gerät weisen mindestens eine erste Elektronik zum Betreiben der drahtlosen Verbindung auf. Die erste Elektronik ist eingerichtet, die drahtlose Verbindung herzustellen und mit mindestens einem Übertragungsprotokoll zu betreiben. Die zentrale Einheit sowie das Gerät weisen mindestens eine zweite Elektronik auf zur Informationsverarbeitung. Die zweite Elektronik des Gerätes kann Aus- und Eingänge aufweisen, die gekoppelt sind mit Messmitteln und/oder mit Betriebsmitteln. Messmittel sind solche, die Umgebungsparameter erfassen und in ein dementsprechendes elektrisches Signal liefern können. Betriebsmittel sind solche, die ein elektrische Signal derart verarbeiten können, dass eine Wirkung hervorgerufen wird, die mit dem Verbrauch von elektrischer Leistung einhergeht. Die erste Elektronik und die zweite Elektronik können zumindest teilweise in Form einer integrierten Schaltung oder eines solchen Schaltkreises ausgebildet sein. Dabei kann es sich um eine integrierte Schaltung handelt, die die erste und die zweite Elektronik zumindest teilweise aufweist.

Messmittel sind eingerichtet, das die Zustände repräsentierende elektrische Signal bereitzustellen. Betriebsmittel sind eingerichtet, das die Befehle repräsentierende elektrische Signal zu verarbeiten.

Eine Heimautomation kann ferner auch derart eingerichtet sein, dass ein mobiles Gerät (z.B. sog. (engl.) "Smartphone") die Zentrale mittels Software bereitstellt und ein elektronisches Türschloss als Aktor fungiert. Denkbar ist, dass beide z.B. über WLAN gekoppelt sind. Häufig ist eine Zentrale als eigenständiges Gerät ausgeführt (Box o.ä.). Gängig ist auch, dass eine Zentrale in ein Gerät integriert ist, z.B. in eine Empfangseinrichtung -TV/STB (engl. "set-tob-box") -. Es kann von Vorteil sein, dass die vorgeschlagen Lösung in einer Heimautomation zum Einsatz kommt. Beachtlich ist der Verbraucher, der für den autonomen Betrieb vorgesehen ist, sowie insbesondere die Energieversorgung dieses Verbrauchers.

Nachfolgend wird die Erfindung anhand von Ausführungsbeispielen und zugehörigen Zeichnungen erläutert. Hierzu zeigen:
- Fig. 1: Wechselschaltung mit Schaltvorrichtung
- Fig. 2: Wechselschalter und Ausgabewerte der Messelemente
- Fig. 3: Wechsel- und Kreuzschalter (mechanisch/elektrisch bedienbar)
- Fig. 4: Wechsel- und Kreuzschalter (mechanisch/elektrisch bedienbar)
- Fig. 5: Heimautomation

Mit der **Fig. 1** wird das Gesamtbild einer Wechselschaltung 1 gezeigt. Hierbei kann es sich beispielsweise um eine Wechselschaltung 1 handeln für eine Raumbeleuchtung mit einem Verbraucher 8, nämlich einer Lampe 8. Die Lampe 8 kann geschalten werden mit zwei Schaltern 7 und 3. Es handelt sich bezüglich der Ausführung der Schalter um Wechselschalter, nämlich um einen herkömmlichen Wechselschalter 7 und um einen Wechselschalter 3.

Vorgesehen ist, dass ein vormaliger herkömmlicher Wechselschalter durch eine Schaltvorrichtung 2 ersetzt werden kann, wobei der Wechselschalter 3 der Schaltvorrichtung 2 die Funktion des vormaligen herkömmlichen Wechselschalters übernimmt. Ferner kann ein Mittel zum Betätigen (nicht dargestellt) vorgesehen sein, mit dem sich die Schaltstellung (34, 35) des Wechselschalters 3 durch händisches Bedienen verändern lässt. Denkbar ist ein mechanischer oder bevorzugt ein elektrischer Taster oder Dergleichen. Die eigentliche Wechselschaltung ist gebildet aus der elektrischen Quelle mit dem Phasenleiter P und dem Nullleiter N, dem Verbraucher 8, dem herkömmlichen Wechselschalter 7 und dem Wechselschalter 3 der Schaltvorrichtung 2 inklusive jeglicher Verbindungen (Leitungen, Klemmen, Kontakte usw.). Insbesondere wird auf die zwei Schaltleitungen hingewiesen, über die die Wechselschalter 3 und 7 miteinander gekoppelt sind. Gemeint sind die, die mit einem ersten Ausgang 32 beziehungsweise mit einem zweiten Ausgang 33 des Wechselschalter 3 gekoppelt sind.

Die Schaltvorrichtung 2 weist ein erstes Messelement 4 und ein zweites Messelement 5 auf sowie eine Elektronik 6. Die Elektronik 6 weist zumindest ein Auswerteelement 61 auf und ggf. ein Kommunikationselement 62. Das Kommunikationselement 62 ist primär vorgesehen, um über eine drahtlose Verbindung 19 mit einer Zentrale 12 selbiger Daten bereitzustellen und von selbiger Daten zu empfangen. Die Daten können u.a. Anweisungen/Befehle sowie Informationen enthalten.

Dem Auswerteelement 61 kommt die Funktion zu, den Messausgang 43 des ersten Messelementes 4, den Messausgang 53 des zweiten Messelementes 5 und/oder das Potenzial einer zusätzlichen Kopplung 37 einzubeziehen in eine Auswertung, die Resultate zu verschiedenen Aspekten der Wechselschaltung hervorbringen kann (Stromfluss, Schalterstellung, Schalterstellung des herkömmlichen Wechselschalters sowie ggf. Defektes/Fehlens des Verbrauchers). Das Auswerteelement 61 kann eingerichtet sein, zwischen zwei und vier Eingangsgrößen zu verwenden, nämlich Schalterstellung (34, 35 oder Mittelstellung dazwischen) des Wechselschalters 3 bereitgestellt über die zusätzliche Kopplung 37 sowie die Messausgänge (43, 53) der Messmittel (4, 5). Das Auswerteelement 61 kann beispielsweise dafür eingerichtet sein, die Funktionalität bereitzustellen, die im Minimum auch ohne Anbindung über eine drahtlose Verbindung 19 bereitzustellen ist. D.h. eine solche Funktionalität, mit der ein händisches Bedienen des Wechselschalter 3 noch möglich ist.

Das Kommunikationselement 62 kann ein handelsübliches Modul (z.B. für "Z-Wave") sein mit Ein- und Ausgängen. Vorzugsweise ist das Auswerteelement 61 auf das Kommunikationselement 62 derart abgestimmt ausgebildet, dass beide (61, 62) sich ohne weitere Umstände koppeln lassen. In der gezeigten Ausführungsform kann das Kommunikationselement 62 eingerichtet sein, auswertbaren Informationen 63 mittels einer drahtlosen Verbindung 19 einer Zentrale 12 bereitzustellen. Zu den auswertbaren Informationen 63 oder auch Resultaten 63 folgt Näheres in der Beschreibung zu der Fig. 2.

Wie vorgeschlagen kann der Wechselschalter 3 als ein elektrisch betriebener Schalter (z.B. Relais) ausgeführt sein. Selbiger kann folglich Steuerkontakte 36 sowie mehrere Arbeitskontakte aufweisen für mind. eine Wechselschalterfunktionalität. Eine solche lässt sich hier mittels dem ersten Eingang 31, dem ersten Ausgang 32 und dem zweiten Ausgang 33 verwenden. In einer ersten Schalterstellung 34 ist der erste Eingang mit dem ersten Ausgang 32 und in einer zweiten Schalterstellung 35 ist der erste Eingang dem zweiten Ausgang 33 elektrisch verbunden.

Mit dem ersten Eingang 31 ist auch der Phasenleiter P aber auch der jeweils erste Eingang (41, 51) der Messeelemente 4 und 5 gekoppelt. Der jeweils zweite Eingang (42, 52) der Messeelemente 4 und 5 ist mit dem ersten Ausgang 32 beziehungsweise mit dem zweiten Ausgang 33 des Wechselschalters 3 gekoppelt. Mit anderen Worte ist jeder zweite Eingang mit einer der zwei Schaltleitungen (32, 33) gekoppelt bzw. elektrisch verbunden.

Jedes der zwei Messelemente 4 und 5 ist so ausgeführt, dass eine erste elektrische Spannung 46 beziehungsweise eine zweite elektrische Spannung 56 demnach bewertet werden kann, ob die jeweilige Spannung über einem Schwellwert liegt oder nicht. Es geht bei dieser Spannung um eine Potenzialdifferenz (46, 56) zwischen den Messeingängen (41/42, 51/52). Demensprechen liefert der Messausgang (43, 53) eine logischen Wert aus der Wertemenge Null "0" und Eins "1" (1 heißt Schwellwert überschritten). Es kann als eine beispielhafte Ausführungsform angesehen werden, dass jedes der zwei Messelemente jeweils einen Spannungskomparator 45 und 55 sowie jeweils einen Widerstand 44 und 54 aufweist.

Die **Fig. 2** verdeutlich mittels "0" und "1" die Spannungswerte an den Messausgängen (43, 53) der Messelemente (4, 5) in drei möglichen Schalterkonstellationen des herkömmlichen Wechselschalters 7 und des Wechselschalters 3 der Schaltvorrichtung 2. Im Grunde lassen sich anstatt der ersten zwei Schalterkonstellationen noch zwei weitere zeigen, die allerdings in der Aussage redundant wären. Auf die dritte Schalterkonstellation (Wechselschalter in Mittelstellung) wird insofern hingewiesen, weil der Verbraucher 8 auch defekt sein oder fehlen könnte. In diesem (gedachten) Fall stände an der rechten Schaltleitung (33) gleichermaßen eine "0". Folglich kann das Ergebnis gemäß der ersten Schalterkonstellation mit dem der dritten Schalterkonstellation dadurch unterschieden werden, ob das Relais 3 in einer Mittelstellung steht oder nicht. Sofern ein solcher Wechselschalter 3 (mit drei Schalterstellungen) nicht in Betracht kommt, lässt sich auch ein mit dem Wechselschalter 3 in Reihe geschalteter zusätzlicher Schalter einsetzen.

Wie bereits erwähnt können einzig die Spannungswerte ("0" und "1") an den Messausgängen (43, 53) der Messelemente (4, 5) Eingang in eine Auswertung finden oder diese zusammen mit einem die jeweilige Schalterstellung (34, 35) beschreibenden Zustand.

Zu den möglichen Aussagen/Resultaten einer Auswertung folgt eine kurze Erörterung. Bezeichnet werden die Zustände ("0" und "1"):

| | |
|---|---|
| - als ML und MR | der Messausgängen (43, 53) der Messelemente (4, 5), |
| - als S1 | des Wechselschalters 3 ("0"/ "1": erste/zweite Schalterst.) sowie |
| - als S0 | der der Mittelstellung. |

(regulär S0="0") Sofern ML="1" oder MR="1" ist der Verbraucher 8 grundsätzlich betriebsbereit. Andernfalls sind zwangsläufig ML="0" und MR="0", was in zwei Fällen passieren kann, nämlich wenn der Wechselschalter 3 stromdurchflossen ist und wenn nicht (Verbraucher 8 defekt). Sofern S0="1" und weder ML="1" noch MR="1" ist, ist der Verbraucher 8 defekt oder nicht vorhanden. Anhand von S1 lässt sich etwas zur Schalterstellung (34, 35) des Wechselschalters 3 sagen. Auf die Schalterstellung des herkömmlichen Wechselschalters 7 kann wie folgt geschlussfolgert werden. Selbiger ist zunächst mit der Schaltleitung (L=Links, R=Rechts) gekoppelt, an der ML="1" oder MR="1" ist. Sind ML="0" und MR="0" und der Wechselschalter 3 ist stromdurchflossen, dann ist der herkömmliche Wechselschalter 7 mit der selben Schaltleitung (L=Links, R=Rechts) gekoppelt wie der Wechselschalter 3.

Mit den aufgezeigten technischen Mitteln besteht ferner die Möglichkeit, letzte Zustände und Aktionen (z.B. Umschalten) vorzuhalten, um aus der Historie der Zustände und Aktionen Schlussfolgerungen zu ziehen. Angenommen es waren ML="1" oder MR="1" und mithin der Verbraucher 8 betriebsbereit, dann stellt sich nach einem durch die Schaltvorrichtung 2 selbst vorgenommenen Umschalten des Wechselschalters 3 und der Konstellation ML="0" und MR="0" die Frage danach nicht, ob der Verbraucher 8 defekt ist. Anders sieht es hingegen aus, wenn sich die Konstellation von ML="1" oder MR="1" in ML="0" und MR="0" ändert, denn das kann (wie oben bereits erörtert) zwei Gründe haben.

Eingangs wurde auf die Verwendung des Kreuzschalters in Wechselschaltungen hingewiesen. Ferner wurde die Bedienung von Schaltern von Hand angesprochen. Sofern elektrische betriebene Schalter zum Einsatz kommen, muss regelmäßig für die Bedienung von Hand eine vom herkömmlichen Schalter abweichende Lösung gefunden werden. Anhand der **Fig. 3** wird ferner vorgeschlagen, in einer Schaltvorrichtung 2 sowohl einen mechanischen als auch einen elektrisch betriebenen Schalter vorzusehen. Dabei kann der ggf. vorhandene mechanische Schalter erhalten bleiben und es wird in dessen Schaltleitungen lediglich ein elektrisch betriebener Kreuzschalterschalter eingefügt. Mit anderen Worten ist der erfindungsgemäße Wechselschalter 3 gebildet aus einen mechanisch bedienbaren Wechselschalter. Der elektrisch bedienbare Kreuzschalterschalter ist lediglich ein Hilfsmittel, um die elektrische von der mechanischen Bedienmöglichkeit zu trennen, sodass beide Schalter unabhängig voneinander fungieren können. Es bietet sich an, dass die Schaltstellung des Kreuzschalterschalters dem Auswerteelement bereitgestellt ist. Hinsichtlich der Kopplung der Messelemente 4 und 5 bzw. deren Messeingänge, sind diese wie gehabt mit dem ersten Eingang 31 sowie mit dem ersten Ausgang 32 und dem zweiten Ausgang 33 des Wechselschalters 3. Im Grunde wird mit dieser Lösung lediglich etwas getrennt, was nicht zwingend zusammengehört. Diese Lösung hat allerdings den immensen Vorteil, dass lediglich eine Art Modul/Baustein zusätzlich zu dem vorhandenen Schalter mit in der Schalterdose unterzubringen ist. D.h. der Anwender/Kunde behält rein optisch/äußerlich die vorhandenen Schalter inkl. Abdeckung usw.

Bezüglich des Wechselschalters 3 ist wesentlich, dass dieser so angeordnet ist, dass an seinem ersten Eingang 31 eine Leitung Verwendung findet und an seinen ersten Ausgang 32 und dem zweiten Ausgang 33 die sog. Schaltleitungen vorgesehen/gekoppelt sind (d.h. kein Kreuzschalter, sondern äußerer Wechselschalter). Lediglich aus dieser Anordnung heraus lässt sich die Aussage treffen, an welchen Ausgang der Strompfad unterbrochen ist.

Ferner ist eine Lösung für die Heimautomation in Verbindung mit Kreuz-/Wechselschaltungen, die insbesondere ohne Detektieren des Stromflusses (durch den Verbraucher) auskommt, auch darin zu sehen, dass ein über eine drahtlose Verbindung 19 ansteuerbarer elektrisch betreibbarer Kreuzschalter zum Einsatz kommt, der eingerichtet ist, die zwei Schaltleitungen gerade oder gekreuzt zu vverbinden. Insofern ist lediglich ein Umschalten möglich ohne Rückschluss auf einen Stromfluss. Derartiges erscheint ggf. dann sinnvoll, wenn die Heimautomation 10 über einen nebengeordneten Weg/Kanal zu der Information gelang, ob der Verbraucher aktiv ist oder nicht.

Bezüglich des Verbrauchers ist die Lösung imstande, dessen Betriebsbereitschaft zu ermitteln. Sofern diese nicht gegeben ist und nach der vorhergehenden Beschreibung die Annahme getroffen wird, dass der Verbraucher defekt ist, kann der Verbraucher auch gänzlich fehlen.

In der Fig. 3 ist der Kreuzschalter in einer ersten (gekreuzten) von zwei Schalterstellungen gezeigt, wohingegen sich in der **Fig. 4** der Kreuzschalter in einer zweiten (ungekreuzten/geraden) Schalterstellungen befindet.

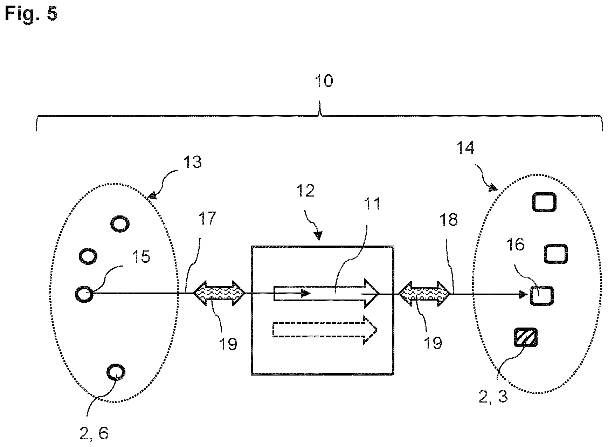

In der **Fig. 5** ist schematisch eine Heimautomation 10 gezeigt. Diese weist eine Zentrale 12 mit einer Informationsverarbeitung 11 auf. Ferner sind Bestandteile/Geräte der Heimautomation 10 wie Sensoren 13 und Aktoren 14 gezeigt. Zwischen einem Sensor 15 und der Zentrale 12 ist jeweils eine Datenübertragung 17 vorgesehen sowie gleichermaßen eine Datenübertragung 18 zwischen dem Aktor 16 und der Zentrale 12. Für jede der beiden Datenübertragungen 17 und 18 wird üblicherweise eine drahtlose Verbindung 19 hergestellt. Einer der Sensoren 13 kann beispielsweise ein Sensor sein, den die Schaltvorrichtung 2 beziehungsweise deren Elektronik 6 verkörpert. Aufgabe dieses Sensors 2, 6 könnte es sein, eine elektronisch auswertbare Information 63 (Stromfluss, Schalterstellung, Schalterstellung des herkömmlichen Wechselschalters sowie ggf. Defektes des Verbrauchers) mittels der drahtlose Verbindung 19 bereitzustellen.

Analog könnte einer der Aktoren 14 beispielsweise auch ein Aktor sein, der die Schaltvorrichtung 2 ist oder in selbige integriert ist, nämlich der Wechselschalter 3 zusammen mit der Elektronik 6. Die Aufgabe eines solchen Aktors könnte darin bestehen, den Wechselschalter 3 zu schalten und folglich zu bewirken, dass in der Wechselschaltung 1 der Verbraucher 8 ein- bzw. ausgeschalten wird. Hierzu übergibt die Zentrale 12 mittels der Informationsverarbeitung 11 und der drahtlose Verbindung 19 der Schaltvorrichtung 2 einen entsprechenden Befehl.

Insofern, dass in dem gezeigten Beispiel Aktor 2 und Sensor 2 jeweils einmal bei den Sensoren 13 sowie bei den Aktoren 14 gezeigt sind, soll die funktionale Differenzierung verdeutlicht werden, auch wenn die Funktionalität eines Sensors und/oder eines Aktors in einer Schaltvorrichtung 2 gleichermaßen verwirklicht sein kann.

Soweit der in die Schaltvorrichtung 2 integrierte Sensor die auswertbaren Informationen bereitstellt (beispielsweise Stromfluss: ja/nein bzw. Verbraucher 8 An/Aus) und der Aktor ein Umschalten des Wechselschalters 3 bewirken kann, ist mithin die Zentrale 12 in der Lage, einem Bediener die ausbereitete Information derart anbieten, dass selbiger mit einer Bedienhandlung den Wechselschalter 3 der Schaltvorrichtung 2 indirekt betätigen kann und dabei ggf. visualisiert bekommt, ob beispielsweise die mit dem Wechselschalter 3 schaltbare Lampe 8 aus- oder eingeschaltet ist.

Es bietet sich an, den Energieverbrauch der Schaltvorrichtung 2 in Grenzen zu halten. Insofern ist es denkbar, ein Relais 36 in einer bistabilen Ausführung einzusetzen. Alternativ lässt sich bei einer monostabilen Ausführungsform nach dem Moment des Schaltes der Energieverbrauch mittels der Pulsweitenmodulation (PWM) reduzieren, wie ggf. vom Hersteller vorgeschlagen.

### Bezugszeichenliste

- P: Phasenleiter
- N: Nullleiter
- 1: Wechselschaltung
- 2: Schaltvorrichtung
- 3: Wechselschalter
- 4: erstes Messelement
- 5: zweites Messelement
- 6: Elektronik / Logik
- 7: herkömmlicher Wechselschalter
- 8: Verbraucher / Lampe

- 10: Heimautomation
- 11: Informationsverarbeitung
- 12: Zentrale
- 13: Sensoren
- 14: Aktoren
- 15: Sensor
- 16: Aktor
- 17: Datenübertragung (Sensor-Zentrale)
- 18: Datenübertragung (Aktor-Zentrale)
- 19: drahtlose Verbindung

- 31: erster Eingang
- 32: erster Ausgang
- 33: zweiter Ausgang
- 34: erste Schaltstellung
- 35: zweite Schaltstellung
- 36: Relais (anteilig, Steuerkontakte)
- 37: zusätzliche Kopplung
- 41: erster Messeingang
- 42: zweiter Messeingang
- 43: Messausgang / dritte elektrische Spannung
- 44: Widerstand
- 45: Spannungskomparator
- 46: erste elektrische Spannung

- 51: erster Messeingang
- 52: zweiter Messeingang
- 53: Messausgang / vierte elektrische Spannung
- 54: Widerstand
- 55: Spannungskomparator
- 56: zweite elektrische Spannung

- 61: Auswerteelement
- 62: Kommunikationselement
- 63: auswertbare Information / Resultat

## Patentansprüche

1. Wechselschaltvorrichtung (2) aufweisend einen Wechselschalter (3), der Wechselschalter (3) aufweisend einen ersten Eingang (31) sowie einen ersten Ausgang (32) und einen zweiten Ausgang (33),
der Wechselschalter (3) ist eingerichtet, den ersten Eingang (31) entweder mit dem ersten Ausgang (32) in einer ersten Schaltstellung (34) oder mit dem zweiten Ausgang (33) in einer zweiten Schaltstellung (35) zu koppeln, **dadurch gekennzeichnet, dass** die Schaltvorrichtung (2) ferner aufweist:
ein erstes (4) und ein zweites (5) Messelement,
wobei jedes der Messelemente (4, 5) einen ersten Messeingang (41, 51) und einen zweiten Messeingang (42, 52) sowie einen Messausgang (43, 53) aufweist,
wobei der erste Messeingang (41) des ersten Messelementes (4) sowie der erste Messeingang (51) des zweiten Messelementes (5) mit dem ersten Eingang (31) des Wechselschalters (3) gekoppelt sind,
wobei der zweite Messeingang (42) des ersten Messelementes (4) mit dem ersten Ausgang (32) des Wechselschalters (3) gekoppelt ist,
wobei der zweite Messeingang (52) des zweiten Messelementes (5) mit dem zweiten Ausgang (33) des Wechselschalters (3) gekoppelt ist,
wobei das erste Messelement (4) und das zweite Messelement (5) eingerichtet sind, entsprechend einer ersten (46) beziehungsweise einer zweiten (56) elektrischen Spannung zwischen dem ersten Messeingang (41, 51) und dem zweiten Messeingang (42, 52),
an dem Messausgang (43, 53) eine dritte (43) beziehungsweise eine vierte (53) elektrische Spannung bereitzustellen,
die dritte (43) und die vierte (53) elektrische Spannung aufweisend jeweils einen Spannungswert, der aussagt, ob die erste (46) beziehungsweise die zweite (56) elektrische Spannung entweder unterhalb oder oberhalb eines Schwellwertes liegt, die Schaltvorrichtung (2) ferner aufweisend ein Auswerteelement (61, 6),
das eingerichtet ist zum Bewerten der dritten (43) und/oder der vierten (53) elektrischen Spannung und das ferner eingerichtet ist, eine elektronisch auswertbare Information (63) bereitzustellen, die aussagt,
ob der erste Eingang (31) stromdurchflossen ist oder nicht.

2. Wechselschaltvorrichtung gemäß Anspruch 1,
wobei das Auswerteelement (61) ferner eingerichtet ist, eine elektronisch auswertbare Information (63) bereitzustellen, die aussagt, ob der erste Ausgang (32) oder der zweite Ausgang (33) stromdurchflossen ist oder nicht.

3. Wechselschaltvorrichtung gemäß Anspruch 1 oder 2,
wobei die Schaltvorrichtung (2) eingerichtet ist, dem Auswerteelement (61) mittels einer zusätzlichen Kopplung (37) die Schaltstellung des Wechselschalters (3) bereitzustellen, nämlich ob der Wechselschalter (3) die erste Schaltstellung (34) oder die zweite Schaltstellung (35) eingenommen hat.

4. Wechselschaltvorrichtung gemäß Anspruch 1, 2 oder 3,
wobei das Auswerteelement (61) eingerichtet ist, die elektronisch auswertbare Information (63) indem bereitzustellen, im Fall der ersten Schaltstellung (34) die vierte elektrische Spannung (53) alternativ im Fall der zweiten Schaltstellung (35) die dritte elektrische Spannung (43) einzubeziehen.

5. Wechselschaltvorrichtung gemäß einem der Ansprüche 1 bis 4,
wobei das erste (4) und/oder das zweite (5) Messelement einen elektrischen Widerstand (44, 54) und einen Spannungskomparator (45, 55) aufweist,
wobei der elektrische (44, 54) Widerstand zwischen beziehungsweise mit dem ersten (41, 51) und dem zweiten (42, 52) Messeingang gekoppelt ist,
wobei der Spannungskomparator (45, 55) eingerichtet ist, eine Potenzialdifferenz zwischen dem ersten (41, 51) und dem zweiten Messeingang (42, 52) zu detektieren, mithin eine Spannung über dem Widerstand, nämlich die erste elektrische Spannung (46) beziehungsweise
die zweite elektrische Spannung (56).

6. Wechselschaltvorrichtung gemäß Anspruch 5,
wobei der Schwellwert der Messelemente (4, 5) derart eingestellt und/oder gewählt ist, dass dieser geringfügig über Null liegt,
wobei geringfügig heißt, dass der Schwellwert nach derjenigen Eigenschaft des Spannungskomparators (45, 55) zu wählen ist, die aussagt, ab welcher Potentialdifferenz (46, 56), der Spannungskomparator (45, 55) selbige zuverlässig detektiert.

7. Wechselschaltvorrichtung gemäß einem der Ansprüche 1 bis 6,
die Schaltvorrichtung (2) ausgebildet zum Betreiben in einer Heimautomation (10), wobei der Schaltvorrichtung (2) eingerichtet ist, als ein Sensor (15) und/oder als ein Aktor (16) der Heimautomation (10) zu fungieren, und demnach eingerichtet ist zum drahtlosen Koppeln (19) mit einer Zentrale (12) der Heimautomation (10),
wobei ggf. der Sensor (2, 6) eingerichtet ist, der Zentrale (10) die Information (63) bereitzustellen,
ob der erste Eingang (31) stromdurchflossen ist oder nicht und/oder ggf. der Aktor (2, 6) eingerichtet ist, einen Befehl indem zu verarbeiten, den Wechselschalter (3) umzuschalten, d.h. die Schaltstellung zu wechseln, nämlich von der ersten Schaltstellung (34) in die zweite Schaltstellung (35) oder umgekehrt.

8. Verfahren zum Betreiben einer Wechselschaltvorrichtung (2) aufweisend einen Wechselschalter (3) gemäß einem der vorhergehenden Ansprüche 1 bis 7, wobei das Verfahren folgende Schritte aufweist:
- Messen der ersten (46) und der zweiten (56) Spannung der Schaltvorrichtung (2) und
- Bereitstellen der dritten (43) beziehungsweise der vierten (53) Spannung der Schaltvorrichtung (2).

9. Verfahren gemäß Anspruch 8,
wobei die dritte Spannung (43) und die vierte Spannung (53) bereitgestellt wird logischen Werten entsprechend,
die logischen Werte aus der Wertemenge 0 und 1;
das Verfahren ferner aufweisend die Schritte:
- dass je nach Schaltstellung (34, 35) des Wechselschalters (3) der Schaltvorrichtung (2)
im Fall der ersten Schaltstellung (34) der negierte -NOT- logische Wert der vierten Spannung (53) als Resultat (63) bereitgestellt wird und alternativ im Fall der zweiten Schaltstellung (35) der negierte -NOT- logische Wert der dritten Spannung (43) als Resultat (63) bereitgestellt wird,
wobei das Resultat (63) aussagt, ob der erste Eingang (31) der Schaltvorrichtung (2) stromdurchflossen ist -falls 1- oder nicht -falls 0-.

10. Verfahren gemäß Anspruch 8,
wobei die dritte Spannung (43) und die vierte Spannung (53) bereitgestellt wird logischen Werten entsprechend,
die logischen Werten aus der Wertemenge 0 und 1;
das Verfahren ferner aufweisend die Schritte:
- Negieren -NOT- der logischen Werte der dritten (43) und der vierten (53) Spannung und
- Addieren -AND- der logischen Werte der dritten (43) und der vierten (53) Spannung sowie
- Bereitstellen des Resultates (63) der Addition, das aussagt, ob der erste Eingang (31) der Schaltvorrichtung (2)
stromdurchflossen ist -falls 1- oder nicht -falls 0-.

## Claims

1. Changeover switching device (2), comprising a changeover switch (3), the changeover switch (3) comprising a first input (31) and a first output (32) and a second output (33),
the changeover switch (3) is configured to couple the first input (31) either to the first output (32) in a first switching position (34) or to the second output (33) in a second switching position (35),
**characterized in that** the switching device (2) further comprises:
a first (4) and a second (5) measuring element,
wherein each of the measuring elements (4, 5) has a first measuring input (41, 51) and a second measuring input (42, 52) and a measuring output (43, 53),
wherein the first measuring input (41) of the first measuring element (4) and the first measuring input (51) of the second measuring element (5) are coupled to the first input (31) of the changeover switch (3), wherein the second measuring input (42) of the first measuring element (4) is coupled to the first output (32) of the changeover switch (3), wherein the second measuring input (52) of the second measuring element (5) is coupled to the second output (33) of the changeover switch (3),
wherein the first measuring element (4) and the second measuring element (5) are configured to provide, according to a first (46) and second (56) electrical voltage, respectively, between the first measuring input (41, 51) and the second measuring input (42, 52),
a third (43) and fourth (53) electrical voltage, respectively, at the measuring output (43, 53),
the third (43) and the fourth (53) electrical voltage each having a voltage value which indicates whether the first (46) and the second (56) electrical voltage, respectively, is either below or above a threshold value,
the switching device (2) further comprising an evaluation element (61, 6) which is configured to evaluate the third (43) and/or the fourth (53) electrical voltage and which is further configured to provide an electronically evaluable information (63) which indicates whether the first input (31) has current flowing through it or not.

2. Changeover switching device according to claim 1,
wherein the evaluation element (61) is further configured to provide an electronically evaluable information (63) which indicates whether the first output (32) or the second output (33) has current flowing through it or not.

3. Changeover switching device according to claim 1 or 2,
wherein the switching device (2) is configured to provide the evaluation element (61) with the switching position of the changeover switch (3) by means of an additional coupling (37), namely whether the changeover switch (3) has assumed the first switching position (34) or the second switching position (35).

4. Changeover switching device according to claim 1,2 or 3,
wherein the evaluation element (61) is configured to provide the electronically evaluable information (63) by including the fourth electrical voltage (53) in the case of the first switch position (34) or alternatively the third electrical voltage (43) in the case of the second switch position (35).

5. Changeover switching device according to any one of claims 1 to 4,
wherein the first (4) and/or the second (5) measuring element comprises an electrical resistance (44, 54) and a voltage comparator (45, 55), wherein the electrical resistance (44, 54) is coupled between and to the first (41, 51) and the second (42, 52) measuring input, respectively, wherein the voltage comparator (45, 55) is configured to detect a potential difference between the first (41, 51) and the second measuring input (42, 52), hence a voltage across the resistance, namely the first electrical voltage (46) and the second electrical voltage (56), respectively.

6. Changeover switching device according to claim 5,
wherein the threshold value of the measuring elements (4, 5) is set and/or selected in such a way that it is slightly above zero,
wherein slightly means that the threshold value is to be selected according to that property of the voltage comparator (45, 55) which indicates from which potential difference (46, 56) the voltage comparator (45, 55) reliably detects the same.

7. Changeover switching device according to any one of claims 1 to 6,
the switching device (2) designed for operation in a home automation system (10), wherein the switching device (2) is configured to function as a sensor (15) and/or as an actuator (16) of the home automation system (10), and is accordingly configured for wireless coupling (19) to a central unit (12) of the home automation system (10), wherein the sensor (2, 6) is configured to provide the central unit (10) with the information (63), if necessary,
whether or not the first input (31) has current flowing through it and/or
if necessary, the actuator (2, 6) is configured to process a command by switching the changeover switch (3), i.e. to change the switching position, namely from the first switching position (34) to the second switching position (35) or vice versa.

8. Method of operating a changeover switching device (2) comprising a changeover switch (3) according to any one of the preceding claims 1 to 7, the method comprising the following steps:
- measuring the first (46) and second (56) voltages of the switching device (2); and
- providing the third (43) and fourth (53) voltages, respectively, to the switching device (2).

9. Method according to claim 8,
wherein the third voltage (43) and the fourth voltage (53) are provided according to logical values,
the logical values being from the value set 0 and 1;
the method further comprising the steps:
- that, depending on the switching position (34, 35) of the changeover switch (3) of the switching device (2)
in case of the first switching position (34) the negated -NOT- logical value of the fourth voltage (53) is provided as result (63) and alternatively
in case of the second switching position (35) the negated -NOT- logical value of the third voltage (43) is provided as result (63),
wherein the result (63) indicates whether the first input (31) of the switching device (2) has current flowing through it -if 1- or not - if 0-.

10. Method according to claim 8,
wherein the third voltage (43) and the fourth voltage (53) are provided according to logical values,
the logical values being from the value set 0 and 1;
the method further comprising the steps of:
- negating -NOT- the logical values of the third (43) and fourth (53) voltages and
- adding -AND- the logical values of the third (43) and fourth (53) voltage and
- providing the result (63) of the addition, which indicates whether the first input (31) of the switching device (2) has current flowing through - if 1- or not - if 0-.

## Revendications

1. Dispositif de commutation (2) comprenant un commutateur (3), le commutateur (3) comprenant une première entrée (31) et une première sortie (32) et une deuxième sortie (33),
le commutateur (3) est agencé pour coupler la première entrée (31) soit à la première sortie (32) dans une première position de commutation (34), soit à la deuxième sortie (33) dans une deuxième position de commutation (35),
**caractérisé en ce que** le dispositif de commutation (2) comprend en outre :
un premier (4) et un deuxième (5) élément de mesure,
dans lequel chacun des éléments de mesure (4, 5) a une première entrée de mesure (41, 51) et une deuxième entrée de mesure (42, 52) et une sortie de mesure (43, 53),
dans lequel la première entrée de mesure (41) du premier élément de mesure (4) et la première entrée de mesure (51) du deuxième élément de mesure (5) sont couplées à la première entrée (31) du commutateur (3), dans lequel la deuxième entrée de mesure (42) du premier élément de mesure (4) est couplée à la première sortie (32) du commutateur (3),
dans lequel la deuxième entrée de mesure (52) du deuxième élément de mesure (5) est couplée à la deuxième sortie (33) du commutateur (3),
dans lequel le premier élément de mesure (4) et le deuxième élément de mesure (5) sont configurés pour fournir, selon une première (46) et une deuxième (56) tension électrique, respectivement, entre la première entrée de mesure (41, 51) et la deuxième entrée de mesure (42, 52),
une troisième (43) et une quatrième (53) tension électrique, respectivement, à la sortie de mesure (43, 53),
la troisième (43) et la quatrième (53) tension électrique ayant chacune une valeur de tension qui indique si la première (46) et la deuxième (56) tension électrique, respectivement, est inférieure ou supérieure à une valeur seuil,
le dispositif de commutation (2) comprenant en outre un élément d'évaluation (61, 6) qui est configuré pour évaluer la troisième (43) et/ou la quatrième (53) tension électrique et qui est en outre configuré pour fournir une information électroniquement évaluable (63) qui indique si la première entrée (31) est traversée ou non par un courant.

2. Dispositif de commutation selon la revendication 1,
dans lequel l'élément d'évaluation (61) est en outre configuré pour fournir une information électroniquement évaluable (63) qui indique si la première sortie (32) ou la deuxième sortie (33) est traversée ou non par un courant.

3. Dispositif de commutation selon la revendication 1 ou 2,
dans lequel le dispositif de commutation (2) est configuré pour fournir à l'élément d'évaluation (61) la position de commutation du commutateur (3) au moyen d'un couplage supplémentaire (37), à savoir si le commutateur (3) a pris la première position de commutation (34) ou la deuxième position de commutation (35).

4. Dispositif de commutation selon la revendication 1, 2 ou 3,
dans lequel l'élément d'évaluation (61) est configuré pour fournir 1' information électroniquement évaluable (63) en incluant la quatrième tension électrique (53) dans le cas de la première position de commutation (34) ou alternativement la troisième tension électrique (43) dans le cas de la deuxième position de commutation (35).

5. Dispositif de commutation selon l'une quelconque des revendications 1 à 4,
dans lequel le premier (4) et/ou le deuxième (5) élément de mesure comprend une résistance électrique (44, 54) et un comparateur de tension (45, 55), la résistance électrique (44, 54) étant couplée entre ou à la première (41, 51) et la deuxième (42, 52) entrée de mesure, respectivement, le comparateur de tension (45, 55) étant conçu pour détecter une différence de potentiel entre la première (41, 51) et la deuxième (42, 52) entrée de mesure, et donc une tension à travers la résistance, à savoir la première tension électrique (46) et la deuxième tension électrique (56), respectivement.

6. Dispositif de commutation selon la revendication 5,
dans lequel la valeur seuil des éléments de mesure (4, 5) est fixée et/ou sélectionnée de telle sorte qu'elle soit légèrement supérieure à zéro,
où légèrement signifie que la valeur seuil doit être choisie en fonction de la propriété du comparateur de tension (45, 55) qui indique à partir de quelle différence de potentiel (46, 56) le comparateur de tension (45, 55) détecte celle-ci de manière fiable.

7. Dispositif de commutation selon l'une quelconque des revendications 1 à 6,
le dispositif de commutation (2) conçu pour fonctionner dans un système domotique (10), le dispositif de commutation (2) étant configuré pour fonctionner comme un capteur (15) et/ou comme un actionneur (16) du système domotique (10) et étant configuré en conséquence pour un couplage sans fil (19) à une unité centrale (12) du système domotique (10), le capteur (2, 6) étant configuré pour fournir l'information (63) à l'unité centrale (10), si nécessaire,
si la première entrée (31) est traversée ou non par un courant et/ou
si nécessaire, l'actionneur (2, 6) est conçu pour traiter une commande en commutant le commutateur (3), c'est-à-dire pour changer la position de commutation, à savoir de la première position de commutation (34) à la deuxième position de commutation (35) ou inversement.

8. Procédé de fonctionnement d'un dispositif de commutation (2) comprenant un commutateur (3) selon l'une quelconque des revendications précédentes 1 à 7, le procédé comprenant les étapes suivantes consistant à :
- mesurer les première (46) et deuxième (56) tensions du dispositif de commutation (2) ; et
- fournir la troisième (43) et la quatrième (53) tension, respectivement, au dispositif de commutation (2).

9. Procédé selon la revendication 8,
dans lequel la troisième tension (43) et la quatrième tension (53) sont fournies selon des valeurs logiques,
les valeurs logiques étant de l'ensemble des valeurs 0 et 1 ;
le procédé comprenant en outre les étapes :
- que, selon la position de commutation (34, 35) du commutateur (3) du dispositif de commutation (2)
dans le cas de la première position de commutation (34), la valeur logique négative -NOT- de la quatrième tension (53) est fournie comme résultat (63) et alternativement
dans le cas de la deuxième position de commutation (35), la valeur logique négative -NOT- de la troisième tension (43) est fournie comme résultat (63),
où le résultat (63) indique si la première entrée (31) du dispositif de commutation (2) est traversée par un courant -si 1 ou non - si 0-.

10. Procédé selon la revendication 8,
dans lequel la troisième tension (43) et la quatrième tension (53) sont fournies selon des valeurs logiques,
les valeurs logiques étant de l'ensemble des valeurs 0 et 1 ;
le procédé comprenant en outre les étapes suivantes :
- la négation - NON - des valeurs logiques des troisième (43) et quatrième (53) tensions et
- l'addition -AND- des valeurs logiques des troisième (43) et quatrième (53) tensions et
- la fourniture du résultat (63) de l'addition, qui indique si la première entrée (31) du dispositif de commutation (2) est traversée par un courant - si 1 - ou non - si 0-.
